# EUROPÄISCHE PATENTSCHRIFT

(11) **EP 1 231 690 B1**
(45) Veröffentlichungstag und Bekanntmachung des Hinweises auf die Patenterteilung: **03.08.2005**
(21) Anmeldenummer: 02003038.3
(22) Anmeldetag: 12.02.2002
(51) Int. Cl.: H02B 1/30, H02G 3/08

(54) **Seitenwand für das Unterteil eines Verteilerkastens für die Elektroinstallation**
Side wall for the base of an electrical distribution enclosure
Paroi de fond pour armoire de distribution électrique

(30) Priorität: 12.02.2001 DE 10106634
(43) Veröffentlichungstag der Anmeldung: 14.08.2002
(73) Patentinhaber: Fohs, Winfried, 66440 Blieskastel (DE)
(72) Erfinder: Fohs, Winfried, 66440 Blieskastel (DE)
(74) Vertreter: Wieske, Thilo

(56) Entgegenhaltungen:
- US-A- 4 624 514
- US-A- 5 101 079

## Beschreibung

Die Erfindung betrifft eine Seitenwand für das Unterteil eines Verteilerkastens für die Elektroinstallation nach dem Oberbegriff des Patentanspruchs 1.

Aus der US-PS 5,101,079 ist ein Verteilerkasten bekannt, bei dem eine Seitenwand für das Unterteil eines Verteilerkastens für die Elektroinstallation so ausgestaltet ist, dass die Seitenwand zumindest einen Schlitz aufweist, der sich von der Anschlussseite für das Oberteil des Verteilerkastens in Richtung der Bodenseite des Unterteils des Verteilerkastens erstreckt, wobei das Material der Seitenwand zumindest im Bereich des Schlitzes eine solche Elastizität aufweist, dass ein Kabel entlang des Schlitzes einschiebbar ist, wobei das Material das Kabel nach Art einer Dichtlippe umschließt. Die Seitenwand wird derart hergestellt, dass zunächst das Unterteil des Verteilerkastens hergestellt wird, wobei als Seitenwand einzelne Stege stehen bleiben. In einem weiteren Arbeitsgang wird auf diese Stege ein weichelastisches Material aufgeschmolzen, dass dann die geschlitzten Bereich bildet.

Weiterhin sind Verteilerkästen bekannt (EP 0 062 135 B1), bei denen in den Seitenwänden Sollbruchstellen derart angebracht sind, dass kreisförmige Öffnungen unterschiedlichen Durchmessers aus den Seitenwänden herausgebrochen werden können. Bevor durch diese Öffnungen Kabel durchgeführt werden, wird über das Ende der Kabel ein Dichtelement gestülpt, das aus einem vergleichsweise elastischen Kunststoff besteht. Das Kabel wird dann durch die Öffnung durchgeführt. Das Dichtelement wird dann in der Öffnung befestigt, so dass der Kabeleintritt in den Verteilerkasten abgedichtet ist.

Diese Verteilerkästen bestehen aus einem Unterteil, dass an der bzw. in der Wand befestigt wird. In diesem Unterteil sind Befestigungsmittel für die Hutschienen untergebracht. Auf diesem Unterteil ist ein Oberteil befestigbar. Dieses Oberteil weist üblicherweise Türen auf, um die Schalter und Sicherungen in dem Verteilerkasten manuell betätigen zu können. Zwischen dem Unterteil und dem Oberteil ist üblicherweise noch eine Dichtung vorhanden.

Demgegenüber soll mit der vorliegenden Erfindung ein Verteilerkasten so ausgestaltet werden, dass die Kabel einfach einbringbar sind, wobei der Verteilerkasten einfach herstellbar sein soll.

Diese Aufgabe wird erfindungsgemäß nach Anspruch 1 gelöst, wonach die Seitenwand als separates Bauteil ausgebildet ist, das an dem Unterteil des Verteilerkastens mechanisch befestigbar ist.

Dabei erweist es sich zum einen als vorteilhaft, dass die Kabel nicht durch Löcher in der Seitenwand durchgefädelt werden müssen. Dies erweist sich insbesondere bei dickeren und damit nur schwer biegbaren Kabeln als vorteilhaft. Außerdem können Beschädigungen des Kabelmantels vermieden werden, die beim Einfädeln der Kabel entstehen können, wenn die Öffnung entlang der Sollbruchstelle eventuell Grate aufweist. Nach der vorliegenden Ausgestaltung können die Kabel in einfacher Weise entlang des Schlitzes eingeschoben werden. Ein Verbiegen der Kabel, um diese einzufädeln, ist nicht erforderlich. Sofern mehrere Schlitze vorhanden sind, können vorteilhaft mehr Kabel in den Verteilerkasten eingeführt werden als bei einer Ausführungsform mit lediglich einem Schlitz.

Vorteilhaft kann weiterhin vermieden werden, dass Kunststoffe verschiedener Elastizität bei der Herstellung in einem Arbeitsgang verarbeitet werden müssen. Durch die getrennte Herstellung der Seitenwand von dem übrigen Verteilerkasten und der einfach durchführbaren mechanischen Befestigung kann dies vorteilhaft vermieden werden. Gegenüber dem Stand der Technik kann insbesondere vermieden werden, dass das elastische Material auf das feste Material aufgeschmolzen werden muss. Dabei erweist sich insbesondere als problematisch, bei dem elastischen Material die Form zu halten.

Gemäß Anspruch 2 weist die Seitenwand mehrere Stege aus wenig elastischem Material auf, wobei jeweils zwischen zwei Stegen das elastische Material mit dem wenigstens einen Schlitz angebracht ist.

Vorteilhaft ergibt sich dadurch eine hinreichende Stabilität und Steifigkeit der Seitenwand, wobei gleichzeitig die Einbringbarkeit der Kabel gemäß der vorliegenden Erfindung gewährleistet ist.

Bei der Ausgestaltung nach Anspruch 3 ist zu dem wenigstens einen Schlitz wenigstens ein zu diesem Schlitz zumindest im wesentlichen senkrecht verlaufender Schlitz angebracht.

Dadurch können die in den Schlitz eingebrachten Kabel besonders gut dichtend umschlossen werden, wenn sich diese Kabel am Schnittpunkt der Schlitze befinden. Die zu dem wenigstens einen Schlitze zumindest im wesentlichen senkrecht verlaufenden Schlitze können an die Schlitze anstoßen oder diese Schlitze kreuzen. Wenn sich die Schlitze kreuzen, werden die Kabel besonders gut dichtend umschlossen.

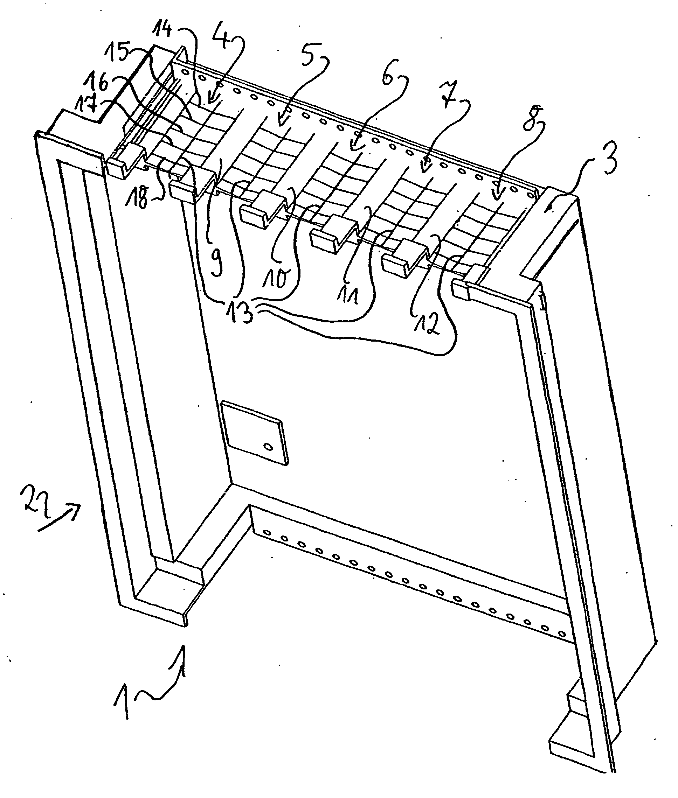

Ein Ausführungsbeispiel der Erfindung ist in der Zeichnung dargestellt. Die Figur zeigt dabei ein Unterteil 1 eines Verteilerkastens für die Elektroinstallation. Dieses Unterteil 1 wird auf der Wand befestigt oder in die Wand eingelassen. Aus der mit dem Pfeil 2 bezeichneten Richtung wird ein Oberteil auf das Unterteil 1 des Verteilerkastens aufgebracht, um den Verteilerkasten abzuschließen. An der Berührungslinie zwischen dem Oberteil und dem Unterteil 1 wird diese Verbindung üblicherweise noch abgedichtet.

Der Figur ist zu entnehmen, dass gemäß der vorliegenden Erfindung in der Seitenwand 3 verschiedene Bereiche 4, 5, 6, 7 und 8 vorhanden sind, die aus einem Material bestehen, das gegenüber dem Material des Unterteils 1 des Verteilerkastens eine größere Elastizität aufweist. Zwischen diesen Bereichen 4, 5, 6, 7 und 8 sind jeweils Stege 9, 10, 11 und 12 vorhanden, die zur Stabilisierung der Seitenwand 3 beitragen.

Es ist zu sehen, dass sich in den Bereichen 4, 5, 6, 7 und 8 jeweils ein Schlitz 13 befindet, der sich von der Anschlussseite für das Oberteil des Verteilerkastens in Richtung der Bodenseite des Unterteils 1 des Verteilerkastens erstreckt. Entlang dieser Schlitze 13 sind Kabel einschiebbar. Diese Kabel werden dabei infolge der Elastizität des Materials in den Bereichen 4, 5, 6, 7 und 8 nach Art einer Dichtlippe umschlossen.

Dieses abdichtende Umschließen erfolgt besonders effizient, wenn weitere Schlitze 14, 15, 16, 17 und 18 vorhanden sind, die in dem Bereich 4 bezeichnet sind. Diese weiteren Schlitze 14, 15, 16 17 und 18 verlaufen in der Darstellung der Figur im wesentlichen senkrecht zu dem Schlitz 13 und kreuzen diesen. Im Bereich jedes Kreuzungspunktes der Schlitze 14, 15, 16, 17 und 18 mit dem Schlitz 13 kann ein Kabel positioniert werden, das dort besonders gut abdichtend umschlossen wird.

Die Schlitze 14, 15, 16,17 und 18 können beispielsweise auch so angebracht sein, dass diese den Schlitz 13 nicht kreuzen sondern senkrecht von diesem weglaufen. Die abdichtende Wirkung verbessert sich allerdings, wenn diese Schlitze 14, 15, 16, 17 und 18 den Schlitz 13 kreuzen.

Die Seitenwand 3 kann wie in dem Ausführungsbeispiel der Figur gezeigt als separates Bauteil ausgebildet werden, dass an dem Unterteil des Verteilerkastens mechanisch befestigbar ist, beispielsweise mittels eines Clip-Verschlusses oder durch eine Feder-NutVerbindung. Dabei erweist es sich als vorteilhaft, dass die Kunststoffe mit den unterschiedlichen Elastizitäten leichter handhabbar sind.

Es ist jedoch auch möglich, die Seitenwand 3 direkt an das Unterteil 1 des Verteilerkastens anzuspritzen.

Bei den üblichen Verteilerkästen befinden sich die Seitenwände, durch die die Kabel eingeführt werden, im aufgehängten Zustand des Verteilerkastens auf der Oberseite und/oder auf der Unterseite. Es ist jedoch auch möglich, Kabel durch die Seitenwände zu führen, die sich im aufgehängten Zustand auf der linken und/oder auf der rechten Seite des Verteilerkastens befinden.

## Patentansprüche

1. Seitenwand (3) für das Unterteil (1) eines Verteilerkastens für die Elektroinstallation, wobei die Seitenwand (3) zumindest einen Schlitz (13) aufweist, der sich von der Anschlussseite für das Oberteil des Verteilerkastens in Richtung der Bodenseite des Unterteils (1) des Verteilerkastens erstreckt, wobei das Material der Seitenwand (3) zumindest im Bereich (4, 5, 6, 7, 8) des Schlitzes (13) eine solche Elastizität aufweist, dass ein Kabel entlang des Schlitzes (13) einschiebbar ist, wobei das Material das Kabel nach Art einer Dichtlippe umschließt,
**dadurch gekennzeichnet, dass** die Seitenwand (3) als separates Bauteil ausgebildet ist, das an dem Unterteil (1) des Verteilerkastens mechanisch befestigbar ist.

2. Seitenwand nach Anspruch 1,
**dadurch gekennzeichnet, dass** die Seitenwand (3) mehrere Stege (9, 10, 11, 12) aus wenig elastischem Material aufweist, wobei jeweils zwischen zwei Stegen (9, 10, 11, 12) das elastische Material mit dem wenigstens einen Schlitz (13) angebracht ist.

3. Seitenwand nach Anspruch 1,
**dadurch gekennzeichnet, dass** zu dem wenigstens einen Schlitz (13) wenigstens ein zu diesem Schlitz (13) zumindest im wesentlichen senkrecht verlaufender Schlitz (14, 15, 16, 17, 18) angebracht ist.

## Claims

1. Side wall (3) for the inferior part (1) of a terminal block for electrical installation, the side wall (3) presenting at least one groove (13) which extends from the branching side for the upper part of the terminal block in direction to the bottom side of the lower part (1) of the terminal block, the material of the side wall (3) presenting at least in the area (4, 5, 6, 7, 8) of the groove (13) an elasticity such that a cable may be introduced along the groove (13), the material embracing the cable like a sealing lip, **characterized in that** the side wall (3) is a separate construction element which is to be fixed mecanically on the lower part (1) of the terminal block.

2. Side wall (3) according to claim 1, **characterized in that** the side wall (3) presents several webs (9, 10, 11, 12) consisting of less elastic material, the elastic material with the at least one groove (13) being each time situated between two webs (9, 10, 11, 12).

3. Side wall (3) according to claim 1, **characterized in that** at least one groove (14, 15, 16, 17, 18) is placed essentially perpendicularly with respect to the at least one groove (13).

## Revendications

1. Paroi latérale (3) pour la partie inférieure (1) d'un coffret de distribution pour une installation électrique, la paroi latérale (3) étant munie d'au moins une fente (13) qui s'étend du côté de raccord pour la partie supérieure du coffret de distribution en direction du côté de fond de la partie inférieure (1) du coffret de distribution, le matériau de la paroi latérale (3) ayant au moins dans la zone (4, 5, 6, 7, 8) de la fente (13) une élasticité telle qu'un câble peut être inséré le long de la fente (13), le matériau entourant le câble à la manière d'une lèvre d'étanchéité, **caractérisé en ce que** la paroi latérale (3) est conçue comme une pièce séparée qui peut être fixée de façon mécanique à la partie inférieure (1) du coffret de distribution.

2. Paroi latérale selon la revendication 1, **caractérisé en ce que** la paroi latérale (3) est munie de plusieurs traverses (9, 10, 11, 12) réalisées dans un matériau moins élastique, la matériau élastique avec au moins une fente (13) étant disposé à chaque fois entre deux traverses (9, 10, 11, 12).

3. Paroi latérale selon la revendication 1, **caractérisé en ce qu'**au moins une fente (14, 15, 16, 17, 18) est disposée essentiellement perpendiculairement à la fente (13).
